# EUROPÄISCHE PATENTSCHRIFT

(11) **EP 0 789 214 B1**
(45) Veröffentlichungstag und Bekanntmachung des Hinweises auf die Patenterteilung: **14.04.2004**
(21) Anmeldenummer: 96114372.4
(22) Anmeldetag: 09.09.1996
(51) Int. Cl.: F28D 20/02

(54) **Latentwärmespeicher**
Heat storage of latent heat type
Stockage de chaleur du type à chaleur latente

(30) Priorität: 12.09.1995 DE 19533622
(43) Veröffentlichungstag der Anmeldung: 13.08.1997
(73) Patentinhaber: Deutsches Zentrum für Luft- und Raumfahrt e.V., 53175 Bonn (DE)
(72) Erfinder: Lindner, Friedrich, Dr., 70771 Leinfelden-Echterdingen (DE); Tattermusch, Peter, 71155 Altdorf (DE)
(74) Vertreter: Hoeger, Stellrecht & Partner

(56) Entgegenhaltungen:
- DE-A- 2 725 658
- DE-A- 3 010 625
- DE-A- 3 345 061

## Beschreibung

Die Erfindung betrifft einen Latentwärmespeicher und einen Behälter, welcher ein mit Latentwärmespeichermedium ausgefülltes Speichervolumen aufnimmt, und mit einem Kreislauf für ein mit dem Latentwärmespeichermedium nicht mischbares und eine gegenüber dem Latentwärmespeichermedium geringere Dichte aufweisendes sowie im Speichervolumen offen durch das Latentwärmespeichermedium geführtes Wärmetauschermedium.

Derartige Latentwärmespeicher sind aus dem Stand der Technik, beispielsweise der DE 30 10 625 bekannt.

Bei diesen besteht jedoch der Nachteil darin, daß insbesondere bei Verwendung von Salzhydraten als Latentwärmespeichermedium und Öl als Wärmetauschermedium, Latentwärmespeichermedium von dem aufsteigenden Wärmetauschermedium mitgerissen und mit in den Kreislauf eingebracht wird. Insbesondere erfolgt dies dann, wenn die durch das Latentwärmespeichermedium aufsteigenden Perlen des Wärmetauschermediums mit einer Salzhydrathülle in ein Sammelvolumen oberhalb des Speichervolumens eindringen, in welchem sich eine Schicht aus Wärmetauschermedium bildet, wobei die Salzhydrathülle nach einer gewissen Koaleszenzzeit zerplatzt und kleinste Salzhydratteilchen in das Wärmetauschermedium im Sammelvolumen schleudert.

Derartige Verunreinigungen des Wärmetauschermediums führen aufgrund von sich im Kreislauf bildenden Ablagerungen des Latentwärmetauschermediums zu Störungen in demselben.

Aus diesem Grund wird bislang gemäß den aus dem Stand der Technik bekannten Lösungen versucht, diese Störungen durch den Einbau von Beruhigungszonen oder Schikanen in dem das Wärmetauschermedium sammelnden Sammelvolumen ein Eintreten von Teilchen des Latentwärmespeichermediums in den Kreislauf zu verhindern.

Der Erfindung liegt daher die Aufgabe zugrunde, Störungen im Kreislauf aufgrund von sich absetzendem Latentwärmespeichermedium zu vermeiden.

Diese Aufgabe wird bei einem Latentwärmespeicher der eingangs beschriebenen Art durch die Merkmale des Anspruchs 1 gelöst.

Durch das erfindungsgemäße Konzept wird somit erreicht, daß es gar nicht mehr erforderlich ist, mit viel Aufwand das Eintreten von Latentwärmespeichermedium in den außerhalb des Speichervolumens liegenden Kreislauf zu verhindern, sondern es wird bewußt der Kreislauf so ausgebildet, daß eintretendes Latentwärmespeichermedium nicht mehr zu Störungen führt, so daß die bisherige Störanfälligkeit des Kreislaufs aufgrund eingedrungenen Latentwärmespeichermediums weitgehend entfällt.

Besonders zweckmäßig ist es dabei, wenn der Kreislauf einen höchsten Punkt aufweist und wenn ausgehend vom höchsten Punkt alle das Wärmetauschermedium führenden Wandbereiche gegenüber einer Horizontalen anstiegsfrei bis zum Speichervolumen verlaufen. Mit dieser Konzeption wird verhindert, daß es ansteigende Segmente des Kreislaufes gibt, die zur Sickenbildung führen und, in welchen sich Latentwärmespeichermedium aufgrund seiner größeren Dichte absetzen kann. Ferner ist die Pumpe im kreislauf derart ausgebildet und/oder angeordnet, dass sich in ihr absetzendes Speichermedium von dem Wärmetauschermedium in eines der Elemente des kreislaufes gespült wird.

Besonders zweckmäßig ist es dabei, wenn die das Wärmetauschermedium führenden Wandbereiche maximal horizontal verlaufen, denn damit ist sichergestellt, daß aufgrund der Strömung des Wärmetauschermediums das von diesem mitgeführte Latentwärmespeichermedium sich nicht absetzen kann sondern dadurch, daß die Wandbereiche maximal waagrecht verlaufen, stets durch die Strömung mitgerissen werden.

Noch vorteilhafter ist es, insbesondere, wenn ein großer Anteil von Latentwärmespeichermedium von dem Wärmetauschermedium mitgenommen wird, wenn die das Wärmetauschermedium führenden Wandbereiche der Elemente des Kreislaufs ausgehend von dem höchsten Punkt stetig fallend bis zum Speichervolumen verlaufen. Damit ist auf alle Fälle sichergestellt, daß jedes Absetzen von Latentwärmespeichermedium dazu führt, daß dieses aufgrund der stetig fallenden Wandbereiche dem Latentwärmespeichermedium wieder zugeführt wird.

In manchen Fällen lassen sich jedoch ansteigende Wandbereiche im Kreislauf aufgrund baulicher Gegebenheiten der einzelnen Komponenten des Kreislaufs, beispielsweise beim Vorsehen eines Wärmetauschers in diesem, nicht vermeiden. In derartigen Fällen ist ergänzend oder als Alternative zum anstiegsfreien Verlauf der Wandbereiche vorgesehen, daß in gegenüber der Horizontalen in Strömungsrichtung ansteigenden Wandbereichen eine Strömungsquerschnittsverengung zur Beschleunigung der Strömung des Wärmetauschermediums vorgesehen ist. Das heißt, diese Lösung basiert darauf, daß einerseits das Absetzen des Latentwärmespeichermediums in Kauf genommen wird, daß aber eine derartige Strömungsquerschnittsverengung erfolgt, welche die Strömung des Wärmetauschermediums derart beschleunigt, daß diese sich absetzendes Latentwärmespeichermedium mitreißt.

Beispielsweise ist in siphonähnlichen Abschnitten des außerhalb des Latentwärmespeichermediums liegenden Kreislaufs, bereits am tiefsten Punkt desselben als auch in einem von diesem ausgehend in Strömungsrichtung ansteigenden Bereich eine Querschnittsverengung zur Beschleunigung der Strömung vorgegeben.

Besonders vorteilhaft ist es ferner, wenn der außerhalb des Speichervolumens verlaufende Kreislauf ein im Speichervolumen liegendes Verteilelement aufweist, wobei dieses Verteilelement dafür sorgt, daß das Wärmetauschermedium ausgehend von diesem in das Latentwärmespeichermedium übertritt und offen durch dieses hindurch verläuft.

Um ferner zu verhindern, daß das Latentwärmespeichermedium in das Verteilelement eintritt und sich in dem Verteilelement ansammelt und damit in diesem die eingangs genannten Störungen aufgrund zu großer Ansammlungen von Latentwärmespeichermedium verursacht, ist vorzugsweise vorgesehen, daß stromaufwärts des Verteilelements im Kreislauf ein Rückschlagventil vorgesehen ist. Dieses Rückschlagventil hat die Aufgabe, bei Ausfall der Umwälzpumpe sicherzustellen, daß das Latentwärmespeichermedium aufgrund seiner größeren Dichte nicht in das Verteilelement eindringt, aus diesem das Wärmetauschermedium verdrängt und sogar teilweise entgegengesetzt zur Strömung des Wärmetauschermediums dann noch in den Kreislauf eindringen kann, denn das erfindungsgemäße Rückschlagventil schließt den Kreislauf sofort, so daß das über dem Verteilelement stehende Latentwärmespeichermedium das Wärmetauschermedium nicht aus dem Verteilelement herausdrängen kann.

Der Kreislauf kann prinzipiell an jeder Stelle das Rückschlagventil aufweisen. Besonders vorteilhaft ist es jedoch, wenn der Kreislauf im wesentlichen unmittelbar vor dem Verteilerelement das Rückschlagventil aufweist.

Im Zusammenhang mit der bisherigen Erläuterung der einzelnen Ausführungsbeispiele wurde nicht auf die Anordnung des Wärmetauschers eingegangen. So sieht ein einfaches Ausführungsbeispiel vor, daß der Wärmetauscher in dem Sammelvolumen für das Wärmetauschermedium oberhalb des Speichervolumens angeordnet ist. Diese Lösung hat den großen Vorteil, daß sich am Wärmetauscher bildendes Latentwärmespeichermedium aufgrund der größeren Dichte direkt durch das Sammelvolumen wiederum zurück in das Latentwärmespeichermedium gelangen kann.

Eine weitere bevorzugte Lösung sieht vor, daß der Wärmetauscher in dem Kreislauf außerhalb des Behälters angeordnet ist. In diesem Fall ist zweckmäßigerweise der Wärmetauscher so ausgebildet, daß dieser in Strömungsrichtung fallende Kanäle für das Wärmetauschermedium aufweist, so daß auch der Wärmetauscher keine Möglichkeit für ein Festsetzen von Latentwärmespeichermedium in diesem bietet.

Besonders zweckmäßig ist es dabei, wenn der Wärmetauscher als Plattenwärmetauscher ausgebildet ist.

Hinsichtlich der in dem Kreislauf angeordneten Umwälzpumpe wurden bislang ebenfalls keine näheren Angaben gemacht. So sieht ein vorteilhaftes Ausführungsbeispiel vor, daß die Umwälzpumpe als Spaltrohrpumpe ausgebildet ist, denn bei einer derartigen Spaltrohrpumpe führt ein Blockieren der Pumpe durch sich festsetzendes Latentwärmespeichermedium zu einer Erwärmung der gesamten Pumpe, was wiederum zur Folge hat, daß sich absetzendes auskristallisiertes Latentwärmespeichermedium aufgrund der Erwärmung wieder aufgelöst wird und somit auch die Pumpe selbst nicht mehr blockiert.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: einen Längsschnitt durch ein erstes Ausführungsbeispiel eines erfindungsgemäßen Latentwärmespeichers;
- Fig. 2: einen Querschnitt durch das erste Ausführungsbeispiel des Latentwärmespeichers längs Linie 2-2 in Fig. 1;
- Fig. 3: eine ausschnittsweise Darstellung eines Teilbereichs eines Kristallisationselements;
- Fig. 4: einen Querschnitt durch ein Ausführungsbeispiel eines Verteilelements;
- Fig. 5: einen Längsschnitt ähnlich Fig. 1 durch ein zweites Ausführungsbeispiel;
- Fig. 6: einen Querschnitt ähnlich Fig. 2 durch das zweite Ausführungsbeispiel längs Linie 6-6 in Fig. 5;
- Fig. 7: einen Längsschnitt ähnlich Fig. 1 durch ein drittes Ausführungsbeispiel;
- Fig. 8: eine perspektivische Darstellung eines erfindungsgemäßen Verteilelements eines vierten Ausführungsbeispiels eines erfindungsgemäßen Latentwärmespeichers.

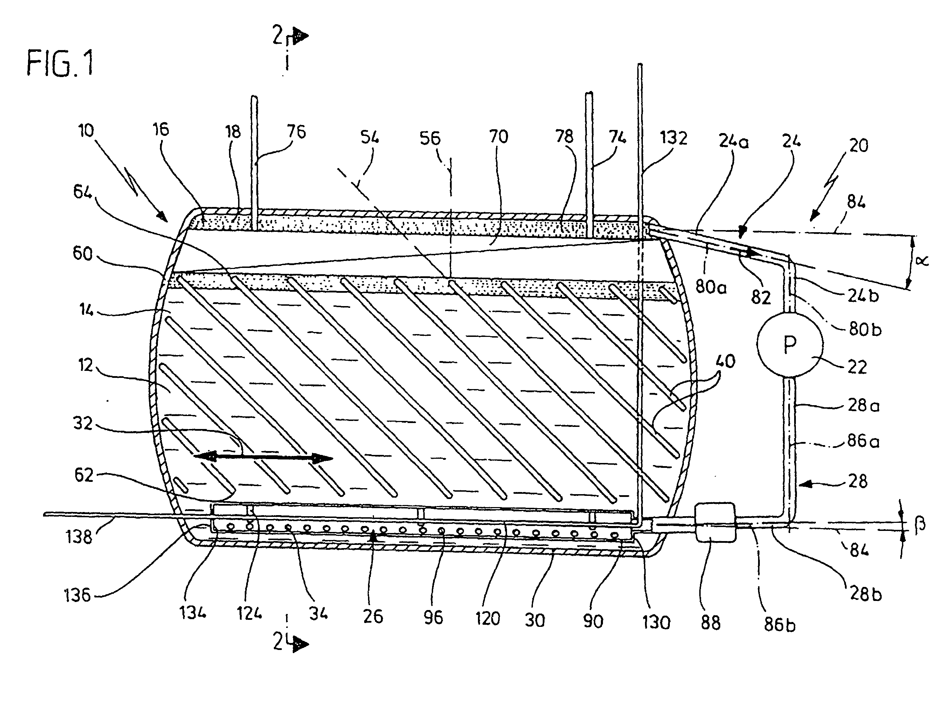

Ein erstes Ausführungsbeispiel eines erfindungsgemäßen Latentwärmespeichers, dargestellt in Fig. 1 bis 3, umfaßt einen als Ganzes mit 10 bezeichneten Behälter, dessen inneres Volumen zum Teil ein Speichervolumen 12 bildet, in welchem ein Latentwärmespeichermedium 14 angeordnet ist.

Über dem Speichervolumen 12 ist ein Sammelvolumen 16 zur Ausbildung einer mit 18 bezeichneten Schicht von Wärmetransportmedium vorgesehen.

Das Sammelvolumen 16 bildet Teil eines als Ganzes mit 20 bezeichneten Kreislaufs für das Wärmetransportmedium 18, wobei dieser Kreislauf 20 noch eine ausgehend von dem Sammelvolumen 16 zu einer Umwälzpumpe 22 führende Abfuhrleitung 24 für das Wärmetransportmedium 18 aufweist und eine von der Pumpe 22 zu einem Verteilelement 26 führende Zufuhrleitung 28. Das Verteilelement 26 ist in dem Speichervolumen 12 vorzugsweise nahe eines Behälterbodens 30 angeordnet und erstreckt sich vorzugsweise über eine Längsrichtung 32 des Behälters 10. Das Verteilelement weist dabei in Längsrichtung 32 aufeinanderfolgende Austrittsöffnungen 34 auf, aus welchen das Wärmetransportmedium 18 offen in Form eines Strahls in das Latentwärmespeichermedium 14 austritt und dort Perlen 36 bildet, wobei diese Perlen 36 durch das im Speichervolumen 12 stehende Latentwärmespeichermedium 14 hindurch in Richtung des Sammelvolumens aufgrund der geringeren Dichte des Wärmetransportmediums relativ zum Latentwärmespeichermedium aufsteigen. In dem Sammelvolumen 16 vereinigen sich dann die Perlen 36 zu der über dem Latent-wärmespeichermedium 14 stehenden Schicht 18 aus Wärmetrans-portmedium, von welcher wiederum eine Abfuhr des Wärmetrans-portmediums über die Abfuhrleitung 24 erfolgt.

Um zu verhindern, daß sich beim Entladevorgang des Latentwärmespeichermediums 14 durch das durch diese hindurchperlende Wärmetransportmedium all zu viele freie Kristalle aus Latentwärmespeichermedium bilden und in Form eines Kristallmatsches nahe des Behälterbodens 30 absetzen, sind in dem Speichervolumen 12 Kristallisationselemente 40 angeordnet, welche Kristallisationsoberflächen 42 aufweisen, die Kristallisationsfixpunkte für die Auskristallisation des Latentwärmespeichermediums bilden, so daß auf den Kristallisationsoberflächen 42 Kristallschichten 44 aufwachsen.

Vorzugsweise sind die Kristallisationselemente 40 in Form von Gittern, beispielsweise mit jeweils parallel zueinander in einer ersten Richtung 46 verlaufenden Stäben 48 sowie quer zur ersten Richtung in einer zweiten Richtung 50 verlaufenden Stäben 52 ausgebildet, wobei jeder Stab eine als Kristallisationsoberfläche 42 wirkende Oberfläche aufweist.

Jedes gitterförmige Kristallisationselement erstreckt sich in einer durch die erste Richtung 46 und die zweite Richtung 50 aufgespannten Ebene 54, wobei die Ebenen 54, wie in Fig. 1 dargestellt, gegenüber einer Vertikalen 56 geneigt verlaufen.

Ferner sind vorzugsweise die Ebenen 54 in derartigen Abständen voneinander angeordnet, daß sich auch zwischen einander benachbarten Kristallisationselementen 40, das heißt beispielsweise den Stäben 48, 52 der jeweils benachbarten Kristallisationselemente 40, keine Kristallbrücken durch Kristallisation bilden und somit die Bildung von Kavernen, in welchen sich die Perlen 36 sammeln könnten und daher nicht weiter bis zur Schicht aus Wärmetransportmedium 18 aufsteigen würden, vermieden wird.

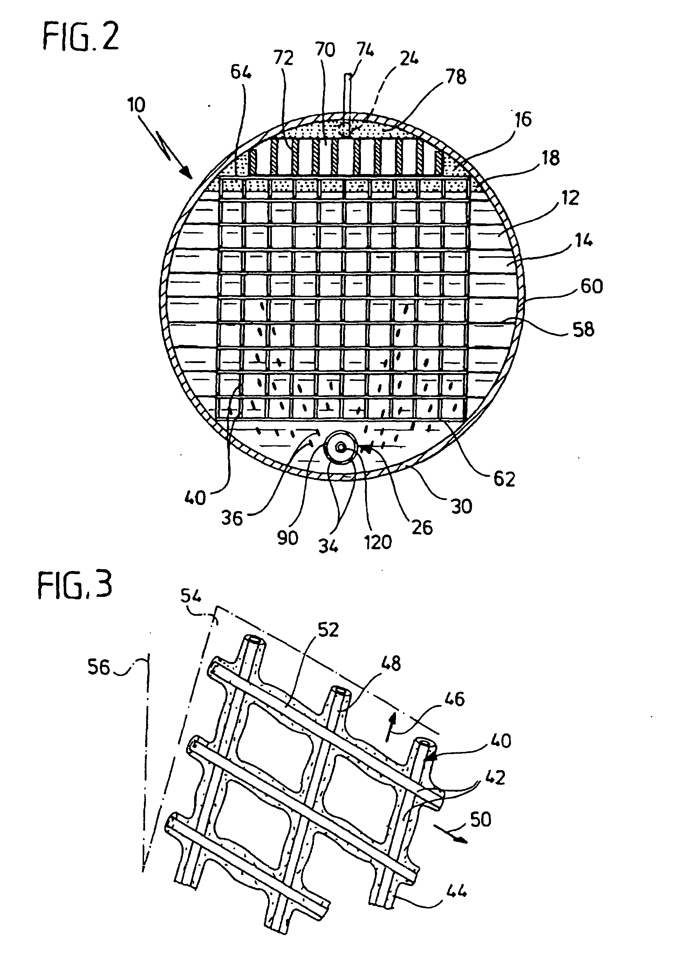

Die einzelnen Kristallisationselemente 40 sind, wie in Fig. 2 dargestellt, über Streben 58 an einer Behälterwand 60 abgestützt, so daß die sich auf den Kristallisationselementen 40 bildenden Kristallschichten 44 von den Kristallisationselementen 40 an den Positionen im Latentwärmespeichermedium 14 gehalten werden, an denen sie sich ausbilden.

Ferner erstrecken sich die Kristallisationselemente 40 vorzugsweise ausgehend von einer Unterkante 62, welche über dem Verteilelement 26 verläuft, bis zu einer Oberkante 64 durch das Speichervolumen 12 hindurch und vorzugsweise aus diesem heraus, so daß die Oberkante 64 im Sammelvolumen 16 liegt.

Vorzugsweise sind dabei alle Kristallisationselemente 40 im Bereich ihrer Oberkante 64 mit einem als Ganzes mit 70 bezeichneten und sich in dem Sammelvolumen 16 erstreckenden Wärmetauscher thermisch leitend verbunden, wobei der Wärmetauscher, wie in Fig. 2 dargestellt, aus einer Vielzahl nebeneinanderliegender Wärmetauscherplatten 72 aufgebaut ist, deren Inneres von einem Wärmetransportmedium durchströmt ist, welches über eine Zuleitung 74 zuführbar und eine Ableitung 76 abführbar ist.

Bei einer Variante ist es aber auch denkbar, daß die Kristallisationselemente 40 mit ihren Oberkanten 64 noch innerhalb des Speichervolumens 12 ohne Kontakt mit dem Wärmetauscher 70 enden.

Der Wärmetauscher 70 erstreckt sich dabei mit seinen Wärmetauscherplatten 72 vorzugsweise oberhalb des Speichervolumens 12 und innerhalb des Sammelvolumens 16, jedoch unterhalb eines vom Sammelvolumen 16 umschlossenen Abfuhrraums 78, in welchen die Abfuhrleitung 24 des Kreislaufs 20 mündet.

Dadurch, daß sämtliches, in den Abfuhrraum 78 gelangende Wärmetauschermedium zunächst durch den Wärmetauscher 70, das heißt die Wärmetauscherplatten 72 desselben, hindurchströmen muß, wirkt der Wärmetauscher 70 ebenfalls als Barriere für beim Entladevorgang nicht auskristallisiertes und vom Wärmetauschermedium in das Sammelvolumen 16 mitgerissenes Latentwärmespeichermedium, da dies, sofern es noch nicht auskristallisiert ist, an dem Wärmetauscher 70 als kältestem Element auskristallisiert und damit wiederum aufgrund seiner größeren Dichte die Möglichkeit hat, beim nächsten Ladezyklus durch die Schicht 18 des Wärmetauschermediums wieder zurück in das Speichervolumen 12 zu sinken. Andererseits wirkt der Wärmetauscher 70 als Barriere für vom Wärmetauschermedium mitgerissene bereits auskristallisierte Partikel aus Latentwärmespeichermedium, die aufgrund der vom Wärmetauscher 70 gebildeten Strömungsschikane ebenfalls nicht in den Abfuhrraum 78 eintreten.

Die thermische Verbindung zwischen dem Wärmetauscher 70 und den Kristallisationselementen 40 hat ferner den Vorteil, daß die Kristallisationselemente 40 selbst bereits beim Entladevorgang Wärme aus dem im Speichervolumen 12 gespeicherten Latentwärmespeichermedium 14 abführen und an den Wärmetauscher 70 abgeben, wodurch eine zusätzliche Unterstützung der Bildung der Kristallschichten 44 auf den Kristallisationsoberflächen führt.

Darüber hinaus ergibt sich beim Beladevorgang des Latentwärmespeichermediums 14 der Vorteil, daß die über den Wärmetauscher 70 zugeführte Wärme zusätzlich noch über die Kristallisationselemente 40 ebenfalls den Kristallschichten 44 zugeführt wird und somit das Aufschmelzen derselben unterstützt.

Ferner haben beim Beladevorgang die Perlen 36 die Möglichkeit, frei durch Zwischenräume zwischen den Kristallschichten 44 hindurchzuperlen und somit einerseits das Speichermedium 12 möglichst gleichmäßig zu erwärmen und andererseits auch zu einer möglichst gleichmäßigen Auflösung der Kristallschichten 44 beizutragen.

Um zu verhindern, daß sich in der Abfuhrleitung 24 vom Wärmetauschermedium mitgerissenes Latentwärmespeichermedium absetzt, insbesondere beim Entladevorgang auskristallisiert, und zu einer Querschnittsverengung, im Extremfall zu einem Querschnittsverschluß, führt, ist die Abfuhrleitung 24 des Kreislaufs 20 so ausgebildet, daß deren Längsachse 80a, b in Strömungsrichtung 82 gegenüber einer Horizontalen 84 nach unten geneigt verläuft, wobei in einem ersten Abschnitt 24a der Abfuhrleitung die Längsachse 80a in einem Winkel α gegenüber der Horizontalen 84 nach unten geneigt verläuft, während in einem Abschnitt 24b die Längsachse 80b der Abfuhrleitung 24 im wesentlichen parallel zur Vertikalen 56, das heißt im Winkel von 90° zur Horizontalen 84, verläuft. Ferner ist auch die Pumpe 22 derart ausgebildet, daß sämtliches, sich in der Umwälzpumpe 22 absetzendes Latentwärmespeichermedium von dem Wärmetauschermedium 18 in die Zufuhrleitung 28 gespült wird.

Auch die Zufuhrleitung 28 weist einen ersten Abschnitt 28a auf, dessen Längsachse 86a im wesentlichen parallel zur Vertikalen 56 verläuft und einen zweiten Abschnitt 28b, in welchem eine Längsachse 86b gegenüber der Horizontalen 84 schräg nach unten um einen Winkel β geneigt in den Behälter 10 hinein bis zum Verteilelement 26 verläuft.

Damit ist ebenfalls sichergestellt, daß sämtliches, sich in der Zufuhrleitung 28 absetzendes Latentwärmespeichermedium von dem Wärmetransportmedium in das Verteilelement 26 hineingespült und somit wiederum über die Austrittsöffnungen 34 dem Latentwärmespeichermedium 14 selbst zugeführt wird.

Vorzugsweise ist vor einer Einmündung der Zufuhrleitung 28 in das Verteilelement 26 ein Rückschlagventil 88 vorgesehen, welches beim Abschalten der Umwälzpumpe 22 oder einem Ausfall derselben verhindert, daß das die größere Dichte aufweisende Latentwärmespeichermedium durch die Austrittsöffnungen 34 in das Verteilelement 26 und sogar noch von diesem ausgehend in die Zufuhrleitung 28 unter Verdrängung des Wärmetauschermediums aus diesen eindringt. Durch das Rückschlagventil 88 wird vielmehr sichergestellt, daß bei einem Ausfall der Umwälzpumpe 22 das noch im Verteilelement 26 und dem Kreislauf 20 vorhandene Wärmetauschermedium ein derartiges Eindringen verhindert.

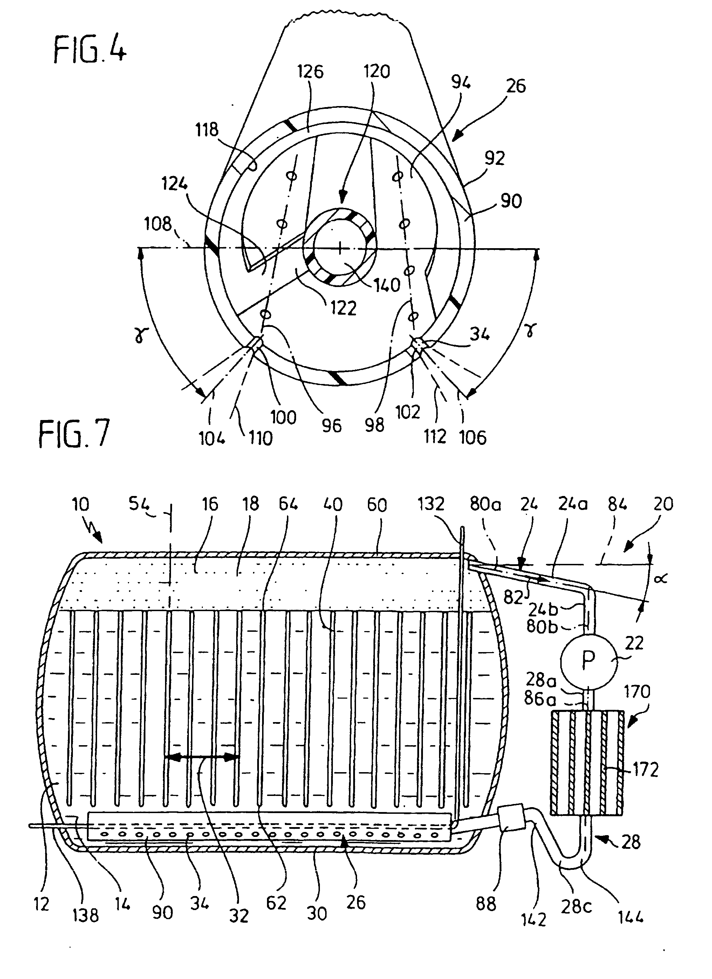

Das Verteilelement 26 ist, wie in Fig. 4 dargestellt, vorzugsweise mit einem äußeren Rohr 90 versehen, welches aus einem vom Latentwärmespeichermedium nicht benetzbaren und gegenüber dem Wärmetauschermedium resistenten Kunststoff hergestellt ist, wobei im Fall von Salzhydrat als Latentwärmespeichermedium und Öl als Wärmetauschermedium als Material vorzugsweise Teflon (PTFE), Nylon oder PVC eingesetzt werden.

Das vorzugsweise eingesetzte Material für das äußere Rohr 90 hat dabei beispielsweise eine Wärmeleitfähigkeit λ von höchstens 0,5 Watt/m x k und somit einen Wärmedurchgangskoeffiziente k = λ/Dicke zwischen ungefähr 15 und ungefähr 500 w/m² x k, so daß eine äußere Wand 92 des äußeren Rohrs 90 selbst bei Zufuhr von vom Wärmetauscher 70 maximal gekühltem Wärmetauschermedium in einem Inneren 94 desselben eine Temperatur aufweist, welche im wesentlichen nahe dem Temperaturniveau des die äußere Wand 92 umgebenden Latentwärmespeichermediums 14 liegt. Damit ist das für das äußere Rohr 90 verwendete Material gleichzeitig thermisch isolierend, um zu verhindern, daß sich an der äußeren Wand 92 keine Kristalle des Latentwärmespeichermediums 14 bilden.

Ferner ist das äußere Rohr 90 vorzugsweise mit zwei Reihen 96, 98 von Austrittskanälen 100 bzw. 102 versehen, wobei sich Kanalachsen 104, 106 der Austrittskanäle 100 bzw. 102 in einem Winkel γ von ungefähr 45° gegenüber einer horizontalen Ebene 108 nach unten geneigt erstrecken und somit aus jedem der Austrittskanäle 100, 102 ein Strahl 110 bzw. 112 von Wärmetauschermedium austritt, der sich dann in dem Latentwärmespeichermedium 12 in die Perlen 36 auflöst, wobei die Strahlen 110 und 112 sich in entgegengesetzte Richtungen vom äußeren Rohr 90 weg ausbreiten.

Dadurch, daß sich nun an der äußeren Wand 92 des äußeren Rohrs keine Kristalle des Latentwärmespeichermediums bilden können, ist auch die Gefahr unterbunden, daß sich an den Austrittsöffnungen 34 der Austrittskanäle 100 bzw. 102 Kristalle des Latentwärmespeichermediums anzusetzen beginnen und somit die Austrittsöffnungen 34 mit zunehmender Zeit beim Entladevorgang des Latentwärmespeichers zusetzen.

Zur Stabilisierung des aufgrund der Verwendung der beispielsweise vorstehend genannten Kunststoffe labilen äußeren Rohrs 90 ist dieses über einen als ganzes mit 120 bezeichneten Träger stabilisiert, welcher sich vorzugsweise durch ein Inneres des äußeren Rohrs 90 hindurcherstreckt und als Rohr ausgebildet ist, das insbesondere koaxial zum äußeren Rohr 90 verläuft.

Das Trägerrohr 120 ist dabei vorzugsweise als tragendes Element für das äußere Rohr 90 vorgesehen, wobei sich das äußere Rohr 90 über Halter 122 an dem Trägerrohr 120 abstützt. Diese Halter 122 weisen beispielsweise eine radial vom Trägerrohr 120 abstehende Strebe 124 auf und einen an einer inneren Wand 118 des äußeren Rohrs 90 zumindest über einen Teilumfangsbereich anliegenden Trägerbügel 126. Vorzugsweise sind die Strebe 124 sowie der Trägerbügel 126 einstückig aus Flachmaterial ausgebildet und fest mit dem Trägerrohr 120 verbunden, wobei zur ungestörten Zugänglichkeit der Reihen 96, 98 der Austrittskanäle 100 bzw. 102 der Trägerbügel 126 an den oberhalb der Reihen 96 bzw. 98 verlaufenden Bereichen der inneren Wand 126 über einen Azimutwinkel von mehr als 200°, vorzugsweise ungefähr 250°, anliegt.

Eine besonders vorteilhafte Lösung sieht dabei vor, daß das Trägerrohr 120 endseitig des äußeren Rohrs 90 aus diesem herausgeführt ist, und zwar beispielsweise an einem ersten, mit der Zufuhrleitung 28 verbundenen Ende 130 eine Wand der Zufuhrleitung 28, vorzugsweise unmittelbar vor deren Übergang in das äußere Rohr 90, durchdringt, parallel zur Vertikalen 56 nach oben durch das Speichervolumen 12 und das Sammelvolumen 16 hindurchverläuft und aus dem Behälter 10 in Form einer ersten Leitung 132 austritt. Dabei kann die Leitung 132 als Auftauleitung im Speichervolumen selbst dienen, wenn dieses sich nach längerer Standzeit verfestigt haben sollte.

Ferner durchdringt das Trägerrohr 120 an einem dem Ende 130 gegenüberliegenden Ende 134 des äußeren Rohrs 90 einen Abschlußdeckel 136 desselben und durchdringt in Form einer zweiten Leitung 138 ebenfalls die Behälterwand 60 des Behälters.

Die erste und die zweite Leitung 132 bzw. 134 dienen zur Zuoder Ableitung eines warmen Aufschmelzmediums, welches somit ein Inneres 140 des Trägerrohrs 120 durchströmt und somit in der Lage ist, beispielsweise im Fall von in das Innere 94 des äußeren Rohrs 90 eingedrungenem und auskristallisiertem Latentwärmespeichermedium, dieses aufzuschmelzen oder aufzutauen.

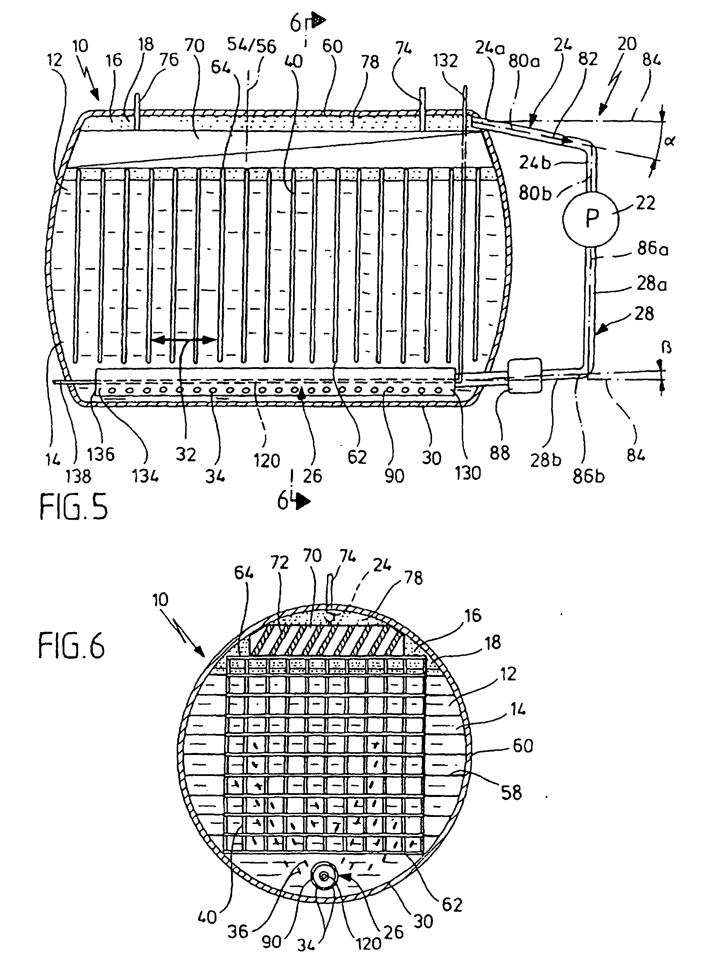

Bei einem zweiten Ausführungsbeispiel eines erfindungsgemäßen Latentwärmespeichers, dargestellt in den Figuren 5 und 6, stehen im Gegensatz zum ersten Ausführungsbeispiel die Ebenen 54, in welchen sich die Kristallisationselemente 40 erstrecken, im wesentlichen parallel zur Vertikalen, so daß die Perlen 36 durch die Zwischenräume zwischen den Kristallisationselementen 40 sich in Richtung des Sammelvolumens 16 bewegen.

Ferner stehen im Gegensatz zum ersten Ausführungsbeispiel bei dem zweiten Ausführungsbeispiel, wie in Fig. 6 dargestellt, die Wärmetauscherplatten 72 schräg zur Vertikalen 56 und bilden daher eine noch effektivere Sperre für durch das Wärmetauschermedium mitgerissenes Latentwärmespeichermedium, welches insbesondere dann, wenn es an den Wärmetauscherplatten 72 auskristallisiert, durch die Zwischenräume zwischen den Wärmetauscherplatten 72 wieder zurück in das Speichervolumen 12 fällt.

Im übrigen ist das zweite Ausführungsbeispiel in gleicher Weise ausgebildet wie das erste Ausführungsbeispiel, so daß auf die Ausführungen hierzu vollinhaltlich Bezug genommen werden kann.

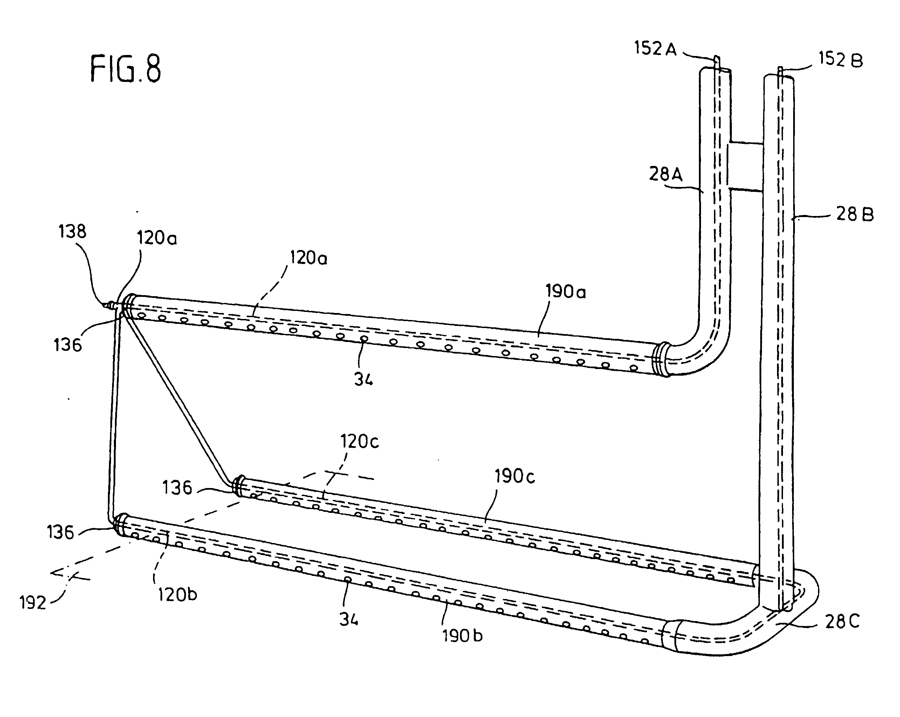

Bei einem dritten Ausführungsbeispiel, dargestellt in Fig. 7, stehen die Kristallisationselemente 40 in gleicher Weise wie beim zweiten Ausführungsbeispiel parallel zur Vertikalen 56 ausgerichtet.

Im Gegensatz zum ersten und zweiten Ausführungsbeispiel ist der Wärmetauscher 70 nicht in dem Sammelvolumen 16 angeordnet, sondern als separater Wärmetauscher 170 in die Zufuhrleitung 28 eingebaut, wobei in diesem separaten Wärmetauscher 170 vorzugsweise intern angeordnete Wärmetauscherplatten 172 parallel zueinander und ebenfalls vorzugsweise parallel zur Vertikalen 56 verlaufen, so daß sich absetzendes Latentwärmetauschermedium zwangsläufig über die Zufuhrleitung 28 in das Verteilelement 26 und von diesem in das Latentwärmespeichermedium zurückgeführt wird.

Darüber hinaus ist, wie beispielsweise am Abschnitt 28c der Zufuhrleitung 28 exemplarisch dargestellt, in dem Kreislauf 20 eine siphonartige Führung der Zufuhrleitung 28 vorgesehen, welche aufgrund der Bauhöhe des Wärmetauschers 170 erforderlich ist. Diese siphonartige Leitungsführung hat zur Folge, daß sich vor einer Einmündung der Zufuhrleitung 28 in das Verteilelement 26 eine tiefste Stelle 144 in der Zufuhrleitung 28 bildet, in welcher sich vom Wärmetauschermedium mitgerissenes Latentwärmespeichermedium, insbesondere beim Entladevorgang, absetzt. Um zu verhindern, daß das sich in der tiefsten Stelle 140 absetzende Latentwärmespeichermedium eine dauerhafte Querschnittsverengung an dieser Stelle in der Zufuhrleitung 28 bewirkt, ist die Zufuhrleitung 28 beginnend mit der tiefsten Stelle und über ihren gesamten, in Strömungsrichtung 82 und gegenüber der Horizontalen 84 ansteigenden Abschnitt 142 im Querschnitt verengt, so daß durch die Verengung des Querschnitts eine Erhöhung der Strömungsgeschwindigkeit des Wärmetauschermediums erfolgt und das Wärmetauschermedium aufgrund seiner erhöhten Geschwindigkeit das sich an der tiefsten Stelle 140 absetzende Latentwärmespeichermedium mitreißt und in das Verteilerelement 26 fördert.

Die Querschnittsverengung ist vorzugsweise so ausgeführt, daß in dieser die Strömungsgeschwindigkeit des Wärmetauschermediums um einen Faktor von ungefähr 1,2 oder größer erhöht wird. Dieser Faktor hängt von der zu überwindenden Steigung und der dafür notwendigen Strömungsgeschwindigkeit ab.

Hinsichtlich der übrigen Merkmale ist das dritte Ausführungsbeispiel in gleicher Weise ausgebildet wie die voranstehenden Ausführungsbeispiele, so daß hinsichtlich der Beschreibung dieser Merkmale, die ebenfalls dieselben Bezugszeichen tragen, auf die Ausführungen zu den ersten Ausführungsbeispielen vollinhaltlich Bezug genommen wird.

Bei einem vierten Ausführungsbeispiel eines erfindungsgemäßen Latentwärmespeichers ist, wie in Fig. 8 dargestellt, das Verteilerelement nicht durch ein einziges äußeres Rohr 90 gebildet, sondern durch drei parallel zueinander verlaufende äußere Rohre 190a, 190b und 190c, welche ebenfalls von Trägerrohren 120a, 120b und 120c durchsetzt sind.

Vorzugsweise werden alle Trägerrohre 120a, 120b, 120c nach Durchdringen der Verschlußdeckel 136 der äußeren Rohre 190a, 190b, 190c zu der einen zweiten Leitung 138 zusammengeführt, welche die Behälterwand 60 durchdringend aus dem Behälter 10 austritt.

Dabei dient die Zusammenführung der Trägerrohre 120a, 120b, 120c zur gemeinsamen zweiten Leitung 138 ebenfalls zur Abstützung der Trägerrohre 120a, b, c und somit auch der in der bereits beschriebenen Art und Weise an diesen gelagerten äußeren Rohren 190a, 190b und 190c relativ zueinander.

Um eine besonders effiziente Verteilung des Wärmetauschermediums in dem Speichervolumen zu erreichen, liegen die beiden äußeren Rohre 190b und 190c in einer unteren Ebene 192 im Abstand voneinander, während das äußere Rohr 190a mittig zwischen diesen, jedoch oberhalb der Ebene 192 parallel zu den äußeren Rohren 190b und 190c verläuft.

Darüber hinaus verläuft die Zufuhrleitung 28 zweigeteilt, nämlich als Zufuhrleitung 28A und 28B einmal zu dem äußeren Rohr 190a und ein andermal über eine Verzweigung 28C zu den beiden äußeren Rohren 190b und 190c, wobei zusätzlich die erste Leitung 152 ebenfalls zweigeteilt, nämlich als Leitung 152A und 152B durch die Zufuhrleitungen 28A bzw. 28B hindurch und vorzugsweise koaxial zu denselben verläuft.

Vorzugsweise sind die Zufuhrleitungen 28A und 28B, welche als Steigleitungen durch das Speichervolumen 12 verlaufen, als Metallrohre, vorzugsweise Edelstahlrohre ausgebildet und mit PTFE-Bändern umwickelt, um die Kristallisation von Latentwärmespeichermedium an diesen zu verhindern oder zumindest zu reduzieren.

Bei einer Variante des vierten Ausführungsbeispiels ist vorgesehen, daß die Trägerrohre 120b und 120c in das Trägerrohr 120a münden, welches dann mit der Leitung 152A eine Rücklaufleitung bildet, während die Leitung 152B die Vorlaufleitung darstellt, oder umgekehrt.

## Patentansprüche

1. Latentwärmespeicher mit einem Behälter (10), welcher ein mit Latentwärmespeichermedium (14) ausgefülltes Speichervolumen (12) aufnimmt, und mit einem Kreislauf für ein mit dem Latentwärmespeichermedium (14) nicht mischbares und eine gegenüber dem Latentwärmespeichermedium geringere Dichte aufweisendes sowie im Speichervolumen (12) offen durch das Latentwärmespeichermedium (14) geführtes Wärmetauschermedium (18), wobei alle Elemente (16, 22, 24, 26, 28) des außerhalb des Latentwärmespeichermediums (14) verlaufenden Kreislaufes (20) des Wärmetauschermediums (18) gemeinsam das Wärmetauschermedium (18) mit Wandflächen und unter Strömungsbedingungen führen, welche sich aus dem Wärmetauschermedium (18) im Kreislauf (20) abscheidendes Latentwärmespeichermedium dem Speichervolumen (12) im Behälter (10) zuführen, wobei der Kreislauf (20) einen höchsten Punkt (78) aufweist, von welchem ausgehend jedes der das Wärmetauschermedium (18) führenden Elemente (16, 24, 26, 28) des außerhalb des Latentwärmespeichermediums (14) liegenden Kreislaufs (20) entweder das Wärmetauschermedium (18) führende Wandbereiche aufweist, die gegenüber einer Horizontalen (84) anstiegsfrei in Richtung zum Speichervolumen (12) verlaufen, oder in aufgrund einer siphonartigen Leitungsführung gegenüber der Horizontalen (84) in Strömungsrichtung (82) ansteigenden Wandbereichen (142) eine Strömungsquerschnittsverengung zur Beschleunigung der Strömung des Wärmetauschermediums (18) aufweist, und wobei eine in dem Kreislauf (20) vorgesehene Pumpe (22) derart ausgebildet ist, daß sich in dieser absetzendes Latentwärmespeichermedium von dem Wärmetauschermedium in eines der Elemente (28) gespült wird.

2. Latentwärmespeicher nach Anspruch 1, **dadurch gekennzeichnet, daß** die das Wärmetauschermedium führenden Wandbereiche der Elemente (16, 22, 24, 26, 28) des Kreislaufs (20) ausgehend von dem höchsten Punkt (78) stetig fallend bis zum Speichervolumen (12) verlaufen.

3. Latentwärmespeicher nach Anspruch 1 oder 2, **dadurch gekennzeichnet, daß** in siphonähnlichen Abschnitten (28c) des außerhalb des Speichervolumens (12) liegenden Kreislaufs bereits am tiefsten Punkt (140) desselben als auch im in Strömungsrichtung (82) ansteigenden Bereich (142) desselben eine Querschnittsverengung zur Strömungsbeschleunigung vorgesehen ist.

4. Latentwärmespeicher nach einem der voranstehenden Ansprüche, **dadurch gekennzeichnet, daß** der außerhalb des Speichervolumens (12) verlaufende Kreislauf (20) ein im Behälter liegendes Verteilelement (26) aufweist.

5. Latentwärmespeicher nach Anspruch 4, **dadurch gekennzeichnet, daß** stromaufwärts des Verteilelements (26) ein Rückschlagventil (88) vorgesehen ist.

6. Latentwärmespeicher nach Anspruch 5, **dadurch gekennzeichnet, daß** der Kreislauf (20) im wesentlichen unmittelbar vor dem Verteilelement (26) das Rückschlagventil (88) aufweist.

7. Latentwärmespeicher nach einem der voranstehenden Ansprüche, **dadurch gekennzeichnet, daß** der Wärmetauscher (70) in einem in dem Behälter (10) über dem Speichervolumen (12) angeordneten Sammelvolumen (16) für das Wärmetauschermedium angeordnet ist.

8. Latentwärmespeicher nach einem der voranstehenden Ansprüche, **dadurch gekennzeichnet, daß** ein Wärmetauscher (170) in Strömungsrichtung fallende Kanäle für das Wärmetauschermedium aufweist.

9. Latentwärmespeicher nach Anspruch 7 oder 8, **dadurch gekennzeichnet, daß** der Wärmetauscher (70, 170) als Plattenwärmetauscher ausgebildet ist.

10. Latentwärmespeicher nach einem der voranstehenden Ansprüche, **dadurch gekennzeichnet, daß** die in dem Kreislauf (20) angeordnete Umwälzpumpe (22) für das Wärmetauschermedium als Spaltrohrpumpe ausgebildet ist.

## Claims

1. Latent heat storage device with a container (10) accommodating a storage volume (12) filled with latent heat storage medium (14), and with a circuit for a heat exchanger medium (18) which is not mixable with the latent heat storage medium (14) and has a lower density than the latent heat storage medium and is conducted openly through the latent heat storage medium (14) in the storage volume (12), all elements (16, 22, 24, 26, 28) of the circuit (20) of the heat exchanger medium (18) extending outside the latent heat storage medium (14) jointly conducting the heat exchanger medium (18) with wall surfaces and under flow conditions which feed latent heat storage medium depositing from the heat exchanger medium (18) in the circuit (20) to the storage volume (12) in the container (10), the circuit (20) having a highest point (78) from which each of the elements (16, 24, 26, 28), conducting the heat exchanger medium (18), of the circuit (20) lying outside the latent heat storage medium (14) either has wall areas conducting the heat exchanger medium (18), which extend in the direction towards the storage volume (12) without rising in relation to a horizontal (84), or has a flow cross-sectional constriction for acceleration of the flow of the heat exchanger medium (18) in wall areas (142) which owing to a siphon-like pipe configuration rise in flow direction (82) in relation to the horizontal (84), and a pump (22) provided in the circuit (20) being designed such that latent heat storage medium depositing therein is flushed by the heat exchanger medium into one of the elements (28).

2. Latent heat storage device in accordance with claim 1, **characterized in that** the wall areas of the elements (16, 22, 24, 26, 28) of the circuit (20) conducting the heat exchanger medium extend at a constant decline from the highest point (78) to the storage volume (12).

3. Latent heat storage device in accordance with claim 1 or 2, **characterized in that** a cross-sectional constriction for acceleration of the flow is provided in siphon-like sections (28c) of the circuit located outside the storage volume (12) already at the lowest point (140) thereof and also in the area (142) thereof rising in flow direction (82).

4. Latent heat storage device in accordance with any one of the preceding claims, **characterized in that** the circuit (20) extending outside the storage volume (12) comprises a distributor element (26) located in the container.

5. Latent heat storage device in accordance with claim 4, **characterized in that** a check valve (88) is provided upstream from the distributor element (26).

6. Latent heat storage device in accordance with claim 5, **characterized in that** the circuit (20) comprises the check valve (88) essentially immediately before the distributor element (26).

7. Latent heat storage device in accordance with any one of the preceding claims, **characterized in that** the heat exchanger (70) is arranged in a collection volume (16) for the heat exchanger medium, which is arranged in the container (10) above the storage volume (12).

8. Latent heat storage device in accordance with any one of the preceding claims, **characterized in that** a heat exchanger (170) comprises channels for the heat exchanger medium which fall in flow direction.

9. Latent heat storage device in accordance with claim 7 or 8, **characterized in that** the heat exchanger (70, 170) is in the form of a plate heat exchanger.

10. Latent heat storage device in accordance with any one of the preceding claims, **characterized in that** the circulating pump (22) for the heat exchanger medium arranged in the circuit (20) is in the form of a canned-motor pump.

## Revendications

1. Accumulateur de chaleur latente équipé d'un réservoir (10), qui présente un volume de stockage (12) rempli de fluide accumulateur de chaleur latente (14), et d'un circuit pour un fluide d'échangeur de chaleur (18) non miscible avec le fluide accumulateur de chaleur latente (14) et présentant une densité plus faible par rapport au fluide accumulateur de chaleur latente et guidé de façon ouverte dans le volume de stockage (12) à travers le fluide accumulateur de chaleur latente (14), tous les éléments (16, 22, 24, 26, 28) du circuit (20), agencé à l'extérieur du fluide accumulateur de chaleur latente (14), du fluide d'échangeur de chaleur (18) guidant conjointement le fluide d'échangeur de chaleur (18) avec des surfaces murales et dans des conditions d'écoulement qui vont du fluide accumulateur de chaleur latente déposant du fluide d'échangeur de chaleur (18) dans le circuit (20) au volume de stockage (12) dans le réservoir (10), le circuit (20) présentant un point (78) le plus haut à partir duquel chacun des éléments (16, 24, 26, 28), véhiculant le fluide d'échangeur de chaleur (18), du circuit (20) situé à l'extérieur du fluide accumulateur de chaleur latente (14) présente des zones de paroi véhiculant le fluide d'échangeur de chaleur (18), qui sont agencées par rapport à une horizontale (84) sans monter en direction du volume de stockage (12), ou bien présentent dans des zones de paroi (142) grimpant dans le sens d'écoulement (82) par rapport à l'horizontale (84) en raison d'un cheminement de conduite du type siphon un rétrécissement de la section d'écoulement pour l'accélération de l'écoulement du fluide d'échangeur de chaleur (18), et en ce qu'une pompe (22) prévue dans le circuit (20) est conçue de telle sorte que du fluide accumulateur de chaleur latente qui se dépose dans cette pompe est lavé par le fluide d'échangeur de chaleur dans l'un des éléments (28).

2. Accumulateur de chaleur latente selon la revendication 1, **caractérisé en ce que** les zones de paroi, guidant le fluide d'échangeur de chaleur, des éléments (16, 22, 24, 26, 28) du circuit (20) sont agencés à partir du point supérieur (78) en descendant constamment jusqu'au volume de stockage (12).

3. Accumulateur de chaleur latente selon la revendication 1 ou 2, **caractérisé en ce qu'**il est prévu un rétrécissement de section pour l'accélération de l'écoulement dans des parties (28c) semblables à des siphons du circuit disposé à l'extérieur du volume de stockage (12) déjà au point le plus bas (140) du circuit de même que dans la zone (142) montant dans le sens d'écoulement (82) du circuit.

4. Accumulateur de chaleur latente selon l'une quelconque des revendications précédentes, **caractérisé en ce que** le circuit (20) agencé à l'extérieur du volume de stockage (12) présente un élément de répartition (26) disposé dans le réservoir.

5. Accumulateur de chaleur latente selon la revendication 4, **caractérisé en ce qu'**un clapet anti-retour (88) est prévu en amont de l'élément de répartition (26).

6. Accumulateur de chaleur latente selon la revendication 5, **caractérisé en ce que** le circuit (20) présente le clapet anti-retour (88) à peu près juste avant l'élément de répartition (26).

7. Accumulateur de chaleur latente selon l'une quelconque des revendications précédentes, **caractérisé en ce que** l'échangeur de chaleur (70) est disposé dans un volume collecteur (16), disposé dans le réservoir (10) au-dessus du volume de stockage (12), pour le fluide d'échangeur de chaleur.

8. Accumulateur de chaleur latente selon l'une quelconque des revendications précédentes, **caractérisé en ce qu'**un échangeur de chaleur (170) présente des canaux descendant dans le sens d'écoulement pour le fluide d'échangeur de chaleur.

9. Accumulateur de chaleur latente selon la revendication 7 ou 8, **caractérisé en ce que** l'échangeur de chaleur (70, 170) est conçu comme un échangeur de chaleur à plaques.

10. Accumulateur de chaleur latente selon l'une quelconque des revendications précédentes, **caractérisé en ce que** la pompe de circulation (22) disposée dans le circuit (20) pour le fluide d'échangeur de chaleur est conçue comme une pompe à gaine.
